Europäisches Patentamt

(19) European Patent Office

Office européen des brevets

(11) Numéro de publication: **0 004 232**
**B1**

(12) **FASCICULE DE BREVET EUROPEEN**

(45) Date de publication du fascicule de brevet: **07.10.81**

(21) Numéro de dépôt: **79400133.9**

(22) Date de dépôt: **02.03.79**

(51) Int. Cl.³: **A 01 B 59/042,**
**A 01 B 71/06, B 60 K 25/00**

(54) Dispositif d'attelage à prise de force indépendante.

(30) Priorité: **03.03.78 FR 7806125**

(43) Date de publication de la demande:
**19.09.79 Bulletin 79/19**

(45) Mention de la délivrance du brevet:
**07.10.81 Bulletin 81/40**

(84) Etats Contractants Désignés:
**BE DE GB IT LU NL**

(56) Documents cités:
**DE - A - 1 655 950**
**DE - B - 1 052 143**
**FR - A - 1 590 121**
**FR - A - 2 209 489**
**GB - A - 1 406 242**

(73) Titulaire: **MANITOU BF**
**Z.I. - Route de Châteaubriant**
**F-44150 Ancenis (FR)**

(72) Inventeur: **Braud, Marcel**
**Saint-Vincent**
**F-44980 Oudon (FR)**

(74) Mandataire: **CABINET BONNET-THIRION**
**95 Boulevard Beaumarchais**
**F-75003 Paris (FR)**

Courier Press, Leamington Spa, England.

Dispositif d'attelage à prise de force indépendante

La présente invention a pour objet un dispositif d'attelage entre un engin de traction et un outil soit porté, soit tracté, du genre dit en trois points et comportant une prise de force pour le fonctionnement de l'outil.

Un attelage de l'espèce pose le problème de la mobilité relative l'un par rapport à l'autre du tracteur et de l'outil; en effet, il y a lieu de prévoir, d'une part, que l'outil soit porté ou tracté, des déplacements dans le plan vertical — qu'il s'agisse de relever l'outil ou de compenser des variations de hauteur entre les éléments associés par l'attelage — et d'autre part, pour un outil tracté en outre dans le plan horizontal, pour des questions de direction, virages, demi-tours, par exemple.

Les systèmes connus mettent en oeuvre pour la transmission de force entre le moteur, thermique par exemple, du tracteur et l'outil, un double joint à la Cardan qui est forcément tenu assez court et qui limite de ce fait sérieusement les déplacements précités.

Le but que vise l'invention est donc de créer un attelage de ce type offrant précisément une mobilité relative maximale entre un engin de traction et un outil dans les plans utiles, tout en conservant à l'attelage des qualités de robustesse.

Pour la solution de ce problème, l'invention propose un dispositif d'attelage interposé entre l'arrière d'un engin de traction et un outil, attelage du type dit à trois points avec deux bras inférieurs à élévation commandée et un bras supérieur de maintien, et comportant une transmission motrice par joints homocinétiques à la Cardan vers l'outil, caractérisé en ce qu'à sa partie arrière, l'engin de traction est équipé d'un mât élévateur où s'articule le bras supérieur, avec un tablier mobile le long du mât élévateur, étendu transversalement à l'engin, adapté d'une part à recevoir des axes d'articulation des deux bras inférieurs de l'attelage trois points, un point quelconque de chaque bras étant relié par une bielle de soutien réglable à un point du tablier situé dans le plan vertical du bras corrrespondant, et d'autre part à supporter un dispositif moteur relié par la transmission à joint de Cardan audit outil.

L'interposition entre engin de traction et outil d'un mât élévateur dont le tablier mobile, qui commande l'élévation des bras inférieurs de l'attelage trois points, supporte le dispositif moteur assure bien, en disposition de base, l'indépendance de mouvement dans un plan vertical entre les éléments attelés. Dans une disposition prévue pour un outil porté, le dispositif moteur est fixé au tablier.

Dans une disposition adaptée à un outil tracté avec une flèche d'attelage, ledit dispositif moteur est monté sur un bâti pivotant selon un axe sensiblement vertical par rapport audit tablier du mât élévateur et monté sur ce dernier.

Cet attelage complète la mobilité dans le plan horizontal, notamment pour la direction dans le cas d'un outil tracté relié par une flèche d'attelage.

Avantageusement, ledit dispositif moteur est du type hydraulique alimenté par une pompe attelée au moteur de l'engin de traction.

D'autres caractéristiques et les avantages s'y rattachant ressortiront d'ailleurs de la description qui va suivre, à titre d'exemple non limitatif, d'une forme de réalisation de l'invention, en référence aux dessins annexés dans lesquels:

la figure 1 est une vue latérale schématique d'une forme de réalisation de l'attelage selon l'invention appliquée à un outil porté;

la figure 2 est une vue schématique latérale d'une forme de réalisation de l'attelàge selon l'invention appliquée à un outil tracté;

la figure 3 est une vue en perspective agrandie du dispositif d'attelage de la figure 2;

Les vues auxquelles on va se référer pour décrire certaines des formes de réalisation de l'invention sont limitées au dispositif d'attelage proprement dit, les engins de traction ainsi que les outils, qu'ils soient "portés" ou "tractés", pouvant affecter les formes et être destinés aux applications les plus variées.

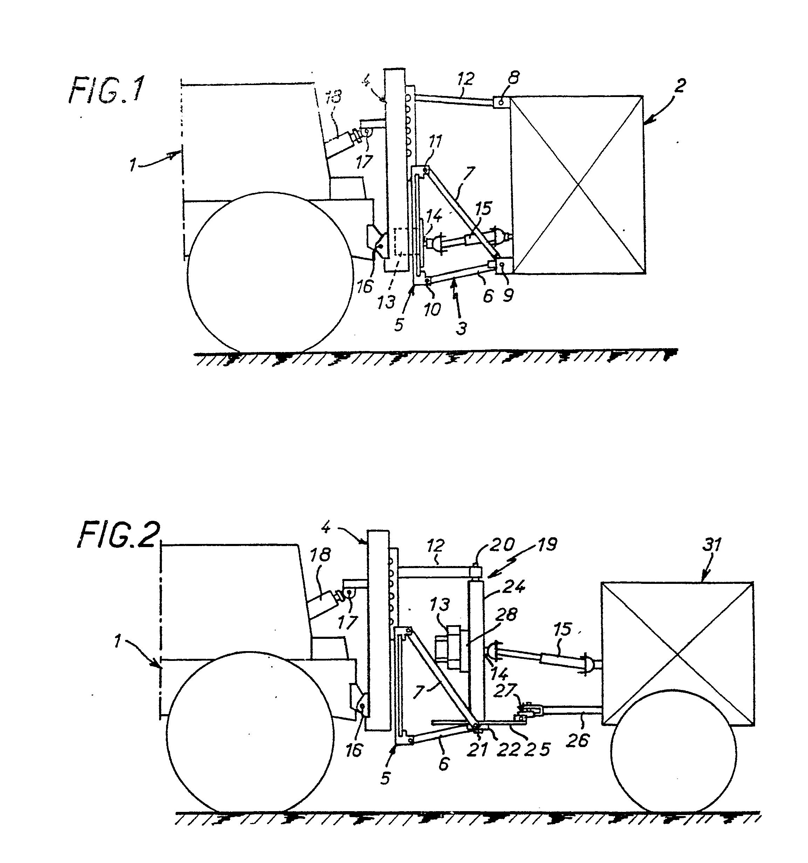

En se référant, en premier lieu, à la figure 1, on trouve entre un engin de traction 1 et un outil du type porté 2, un attelage désigné par 3 dans son ensemble. Ce dernier se compose essentiellement d'un petit mât élévateur 4 le long duquel peut coulisser un tablier 5 sous l'effet de vérins non représentés. Sur le tablier 5 viennent s'articuler les bras inférieurs 6, et leurs bielles de soutien 7, de l'attelage du type à trois points; les dispositifs de fixation 8, 9 de l'outil porté coopèrent par articulation, d'une part, à la partie inférieure, avec les axes 10, 11 assurant la jonction des bras 6, et des bielles de soutien 7 et, d'autre part, au sommet avec un bras supérieur 12 surmontant le tablier 5 pour s'articuler sur le mât 4. Le tablier 5 est adapaté à supporter un dispositif moteur 13, hydraulique par exemple, dont l'arbre de sortie 14 est relié par un arbre télescopique 15 à double joint à la Cardan à l'outil porté 2.

De façon connue en soi, le mât élévateur 4 est, de son côté, solidarisé l'engin de traction 1, en des points d'articulation fixes 16 et réglables 17 (par vérin 18, par exemple).

On notera que cette forme de réalisation permet de conserver à la transmission par joint à la Cardan son angle de départ que l'on maintiendra toujours à une valeur minimale sur l'horizontale.

Le dispositif moteur 13 peut être alimenté par le système hydraulique général de l'engin de traction ou par une pompe séparée entraînée par le moteur principal de l'engin.

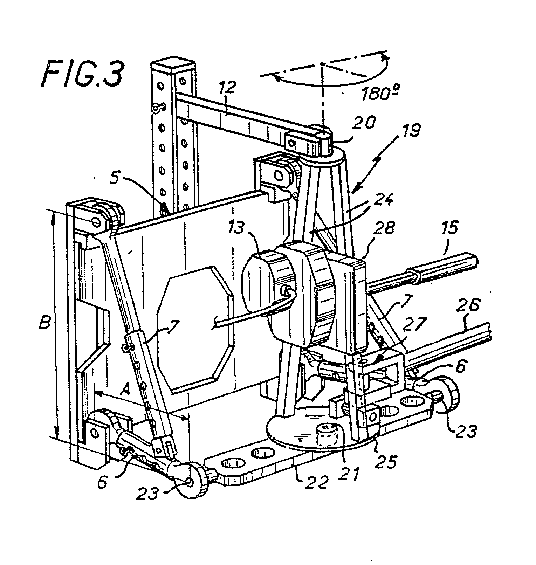

Dans la figure 2 qui correspond à une variante du dispositif d'attelage de l'invention plus spécialement adaptée aux outils tractés, le tablier 5 du mât élévateur 4 comporte un bâti pivotant désigné par 19 dans son ensemble. En se référant également à la figure 3, on note que ce bâti 19 pivote autour d'axes 20, 21 tourillonnés l'un, 20, supérieur à l'extrémité libre du bras 12, l'autre, 21, dans une barre d'attelage 22 prise entre les axes 23 des bras horizontaux 6 de l'attelage trois points. Le bâti proprement dit est constitué par l'assemblage de deux montants 24 disposés en V inversé, dont les pieds sont solidaires d'une platine 25 portant l'axe 21, et les sommets associés à l'axe 20.

La flèche d'attelage 26 de l'outil ou de la machine tractée 31 est articulée en 27 sur cette platine 25.

Sur les montants 24 est rapportée une plaque 28 formant socle du dispositif moteur 13 dont on a ébauché l'arbre de prise de force 15, télescopique avec double joint à la Cardan.

On remarquera que les bras inférieurs 6, et les bielles de soutien 7 de l'attelage trois points sont du type télescopique, avec arrêt par chevilles par exemple, de façon à autoriser un réglage des cotes A et B et, de ce fait, de l'alignement, au départ, de l'arbre 15. Les vérins (non représentés) assurant la course du tablier 5 sur le mât 4 peuvent d'ailleurs, également, être utilisés à cette fin.

Ainsi qu'il ressort nettement de la figure 3, cette disposition de l'attelage selon l'invention permet un débattement de 180° dans le plan horizontal, de part et d'autre de l'axe de symétrie longitudinal, entre engin de traction et outil tracté. Elle est notamment optimale dans le cas d'un engin de traction à roues arrière directrices.

Il va de soi que l'invention ne se limite en aucune manière aux formes de réalisation décrites et représentées mais en globe toute variante d'exécution.

## Revendications

1. Dispositif d'attelage interposé entre l'arrière d'un engin de traction (1) et un outil (2, 31) attelage du type dit à trois points avec deux bras inférieurs (6) à élévation commandée et un bras supérieur (12) de maintien, et comportant une transmission motrice (15) par joints homocinétiques à la Cardan vers l'outil, caractérisé en ce qu'à sa partie arrière, l'engin de traction est équipé d'un mât élévateur (4) où s'articule le bras supérieur (12), avec un tablier (5) mobile le long du mât élévateur, étendu transversalement à l'engin, adapté d'une part à recevoir des axes d'articulation (10) des deux bras inférieurs (6) de l'attelage trois points, un point quelconque de chaque bras (6) étant relié, par une bielle de soutien (7) réglable, à un point (11) du tablier situé dans le plan vertical du bras correspondant, et d'autre part à supporter un dispositif moteur (13) relié par la transmission (15) à joints de Cardan audit outil.

2. Dispositif d'attelage selon la revendication 1, pour un outil du type porté, caractérisé en ce que le dispositif moteur (13) est fixé au tablier (5).

3. Dispositif d'attelage selon la revendication 1, pour un outil du type tracté par une flèche d'attelage, caractérisé en ce que le dispositif moteur (13) est monté sur un bâti (19) pivotant par rapport au tablier (5) autour d'un axe vertical (20) tourillonnant à l'extrémité du bras supérieur (12) et d'un axe vertical (21) tourillonnant dans une barre d'attelage (22) tenue par les bras inférieurs (6) de l'attelage.

4. Dispositif d'attelage selon la revendication 3, caractérisé en ce que le bâti pivotant (19) est équipé d'une articulation (27) adaptée à atteler une flèche d'outil (26).

5. Dispositif d'attelage selon une quelconque des revendications précédentes, caractérisé en ce que le dispositif moteur (13) est du type hydraulique alimenté par une pompe couplée au moteur de l'engin de traction.

## Claims

1. A coupling device interposed between the rear of a tractor (1) and an implement (2, 31), the coupling being of the type called a three-point coupling with two lower arms (6) having controlled elevation and an upper retaining arm (12), and comprising a drive transmission (15) to the implement by means of Cardan homokinetic joints, characterised in that, at its rear, the tractor is provided with an elevator mast (4) on which the upper arm (12) is articulated, with a support apron (5) which is moveable along the elevator mast and extends transversely of the tractor and which is designed both to receive articulation pivots (10) of the two lower arms (6) of the three-point coupling, any point of each arm (6) being connected by means of an adjustable supporting rod (7) to a point (11) of the support apron located in the vertical plane of the corresponding arm, and to carry a motor device (13) which is connected to the implement by means of the transmission (15) having Cardan joints.

2. A coupling device according to claim 1, for an implement of the type which is carried, characterised in that the motor device (13) is fixed to the support apron (5).

3. A coupling device according to claim 1, for an implement of the type which is drawn by means of a coupling bar, characterised in that the motor device (13) is mounted on a frame (19) which pivots relative to the apron (5) about a vertical pivot (20) which swivels at the end of the upper arm (12) and about a vertical pivot (21) which swivels in a coupling bar (22) which is held by the lower arm (6) of the coupling.

4. A coupling device according to claim 3, characterised in that the pivoting frame (19) has a joint (27) designed to couple a draw bar (26).

5. A coupling device according to any one of the preceding claims, characterised in that the motor device (13) is of the hydraulic type supplied by a pump coupled to the engine of the tractor.

## Patentansprüche

1. Dreipunkt-Kupplungsvorrichtung zwischen dem Heck einer Zugmaschine (1) und einem Gerät (2, 31), mit zwei unteren Armen (6) für gesteuerten Hub und einem oberen Haltearm (12), einer homokinetische Kardangelenke aufweisenden Antriebsübertragungsvorrichtung für das Gerät, dadurch gekennzeichnet, daß die Zugmaschine an ihrem Heckteil ausgestattet ist mit einem Hubmast (4), an dem der obere Arm (12) angelenkt ist, mit einer entlang des Hubarmes beweglichen Tafel (5), die sich quer zur Maschine erstreckt und einerseits zur Aufnahme von Drehachsen (10) der beiden unteren Dreharme (6) der Dreipunkt-Kupplung ausgebildet ist, wobei irgendein Punkt jedes Arms (6) mittels eines einstellbaren Stützglieds (7) mit einem Punkt (11) der Tafel verbunden ist, der in der Vertikalebene des entsprechenden Arms liegt, sowie andererseits ausgebildet ist zur Lagerung einer Antriebsvorrichtung (13), die über die Kardan-Übertragungsvorrichtung (16) mit dem Gerät verbunden ist.

2. Vorrichtung nach Anspruch 1 für ein getragenes Gerät, dadurch gekennzeichnet, daß die Antriebsvorrichtung (13) an der Tafel (5) befestigt ist.

3. Vorrichtung nach Anspruch 1 für ein mittels einer Kupplungsdeichsel gezogenes Gerät, dadurch gekennzeichnet, daß die Antriebsvorrichtung (13) auf einem Drehgestell (15) montiert ist, das sich bezüglich der Tafel (5) um eine vertikale Drehachse (20) am Ende des oberen Arms (12) und um eine vertikale Drehachse (21) in einer von den unteren Armen (6) der Kupplung gehaltenen Kupplungsstange (22) dreht.

4. Vorrichtung nach Anspruch 3, dadurch gekennzeichnet, daß das Drehgestell (19) mit einem Drehgelenk (27) ausgestattet ist, das für die Ankupplung einer Gerätedeichsel (26) ausgelegt ist.

5. Vorrichtung nach einem der vorhergehenden Ansprüche, dadurch gekennzeichnet, daß die Antriebsvorrichtung (13) eine hydraulische Antriebsvorrichtung ist, die von einer an den Antrieb der Zugmaschine gekuppelten Pumpe gespeist wird.

FIG.1

FIG.2

FIG.3